# EUROPEAN PATENT APPLICATION

(11) **EP 4 685 704 A1**
(43) Date of publication of application: **28.01.2026**
(21) Application number: 25188112.4
(22) Date of filing: 08.07.2025
(51) Int. Cl.: G06N 3/084, G06N 3/092, G06N 3/098

(54) **DYNAMIC COMPRESSION BY REINFORCEMENT LEARNING IN A DISTRIBUTED LEARNING ENVIRONMENT**

(30) Priority: 24.07.2024 US 202418783235
(71) Applicant: VMware LLC, Palo Alto, CA 94304 (US)
(72) Inventor: Ben-Izhak, Yaniv, Pardes Hanna-Karkur (IL); Vargaftik, Shay, Haifa (IL)
(74) Representative: Grünecker Patent- und Rechtsanwälte PartG mbB

(57) **Abstract**

An example device includes: a first system configured to implement a model having first parameters, generate gradients for the first parameters in response to training the model on first data sets, and compress the gradients based on second parameters; and circuits in the first system, the circuits including a network interface controller. The first system is further configured to receive updates to the second parameters from a second system through the network interface controller coupled to a network, send the gradients as compressed to a third system through the network interface controller, and apply the updates to the second parameters to adjust resource consumption of at least one of the circuits.

## Description

### BACKGROUND

Machine learning may refer to a subset of artificial intelligence that enables computing devices to learn from data, and make predictions or decisions from the data, without being explicitly programmed to perform specific tasks. A machine learning model may be a set of one or more algorithms trained on data to produce estimates about data patterns. The data pattern estimates can be used to make predictions, make classifications, etc. for input data. In machine learning, training may be a process evaluating the data pattern estimates against known data patterns using an error function and adjusting parameters of the model to minimize the error function.

One example machine learning model can be a neural network, which may be a model having linked processing nodes that simulate function of the human brain. A neural network can include node layers having an input layer, one or more hidden layers, and an output layer. Each node (e.g., artificial neuron) can connect to at least one other node and the connections between nodes can have weights. The weights can determine the strength of connections between nodes. A node can receive one or more inputs (e.g., from weighted connections), perform a computation, and produce an output. A node can apply an activation function to computation and the output of a node can be considered as its activation. Activations can be passed to other nodes through the weighted connections. Nodes can also have biases that can adjust the threshold of the activation functions. The weights and biases can be the parameters of the model that comprises the neural network. Training of a neural network can include updating the weights and biases to minimize a loss function.

Distributed and federated learning can be two approaches to training machine learning models across multiple devices. Distributed learning may be a process where training data can be distributed to multiple devices from a central source, the training data can be used to train local machine learning models at the devices, and the results of the training can be aggregated and used to update a global model. Federated learning may be a form of distributed learning where the devices can train their local models using local training data obtained at the devices (e.g., without obtaining training data from a central source).

Implementation of a distributed or federated learning environment can include challenges in data transmission. The environment can include multiple client devices in communication with a server over a network. The client devices can send data to the server, where the data can be large data sets (e.g., parameters, gradients, etc.). For example, a machine learning model used as a local model at a client device can be a neural network having parameters that number in the millions or billions. Training of such models can result in large sets of parameter updates to be sent from the client devices to the server in order to update a global model at the server. The amount of data that needs to be sent from the client devices to the server can consume significant resources, such as resources of the client devices, resources of the network, resources of the server, and the like. It is desirable to provide for management of the data transmission between client devices to the server in a distributed or federated learning environment in order to, for example, optimize resource consumption.

### SUMMARY

In an embodiment, a device includes a first system configured to implement a model having first parameters, generate gradients for the first parameters in response to training the model on first data sets, and compress the gradients based on second parameters. The device includes circuits in the first system, the circuits including a network interface controller. The first system is further configured to receive updates to the second parameters from a second system through the network interface controller coupled to a network, send the gradients as compressed to a third system through the network interface controller, and apply the updates to the second parameters to adjust resource consumption of at least one of the circuits.

In an embodiment, an apparatus includes a first server, coupled to a network, configured to implement a first model. The apparatus includes a second server, coupled to the network, configured to implement a second model. The apparatus includes a client device including circuits, the circuits including a network interface controller coupled to the network. The client device is configured to implement a third model having first parameters, generate gradients for the first parameters in response to training the third model on first data sets, compress the gradients based on second parameters, receive, through the network interface controller, updates to the second parameters from the second server, send, through the network interface controller, the gradients as compressed to the first server, and apply the updates to the second parameters to adjust resource consumption of at least one of the circuits.

In an embodiment, a method of data transmission in a network includes implementing, by a first system of a device coupled to the network, a model having first parameters. The method includes generating, by the first system, gradients for the first parameters in response to training the model on first data sets. The method includes compressing, by the first system, the gradients based on second parameters. The method includes receiving, at the first system over the network, updates to the second parameters from a second system. The method includes sending, from the first system over the network, the gradients as compressed to a third system. The method includes applying, by the first system, the updates to the second parameters to adjust resource consumption of at least one circuit in the device.

### BRIEF DESCRIPTION OF THE DRAWINGS

Fig. 1 is a block diagram depicting a communication system according to embodiments.
Fig. 2 is a block diagram depicting a computing device according to embodiments.
Fig. 3 is a block diagram depicting a logical view of the models in the communication system of Fig. 1 according to some embodiments.
Fig. 4 is a block diagram depicting a system of a client device according to some embodiments.
Fig. 5 is a block diagram depicting a system of a parameter server according to some embodiments.
Fig. 6 is a block diagram depicting a system of an RL agent server according to some embodiments.
Fig. 7 is a flow diagram depicting a method of transmitting data from a client device to a parameter server according to some embodiments.
Fig. 8 is a flow diagram depicting a method of processing data received at a parameter server received from client devices over network according to some embodiments.
Fig. 9 is a flow diagram depicting a method of processing data received at RL agent server received from an RL environment over a network according to some embodiments.

### DETAILED DESCRIPTION

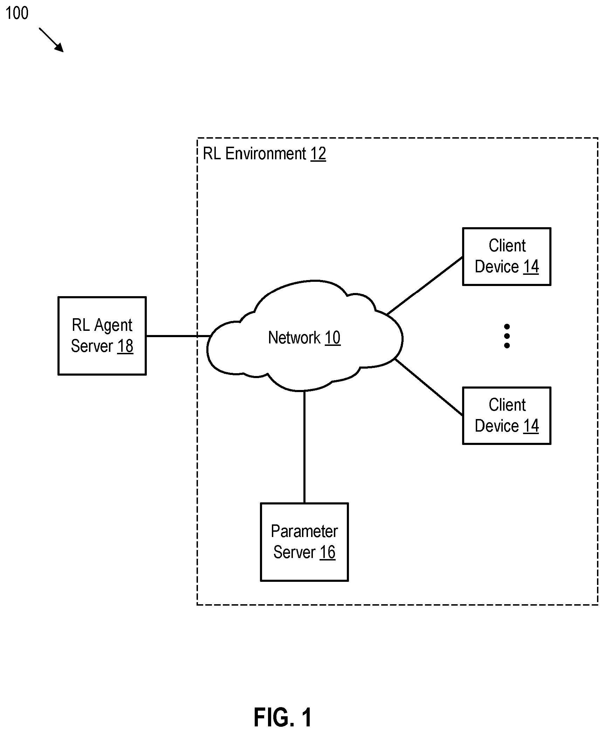

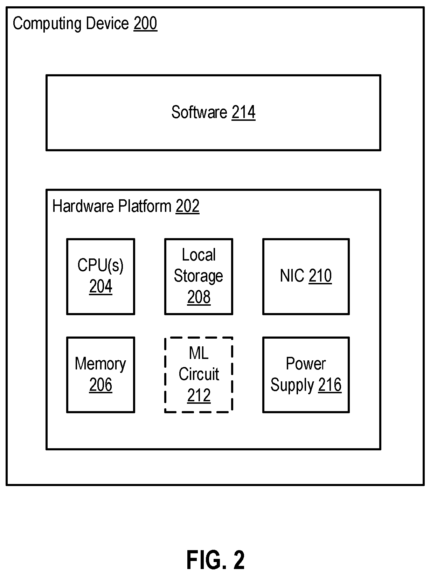

Fig. 1 is a block diagram depicting a communication system 100 according to some embodiments. Communication system 100 includes a reinforcement learning (RL) environment 12 and an RL agent server 18. Reinforcement learning may be a type of machine learning where an agent (referred to as an RL agent) learns to make decisions by interacting with an environment (referred to as an RL environment) to achieve a specific goal. An RL agent may be a decision-maker that takes actions in the RL environment with the goal of maximizing a reward over time. RL agent server 18 can implement an RL agent for RL environment 12. An RL environment may be the portion of a communication system with which an RL agent interacts. RL environment 12 may include multiple client devices 14 and a parameter server 16 coupled to a network 10. RL agent server 18 can be coupled to network 10 for communication with client devices 14 and parameter server 16. As used herein, a server may be a physical computing device configured to communicate with other devices. An example physical computing device is shown in Fig. 2 and described below. While a server may execute software, unless otherwise indicated a server is not itself a software component.

In some embodiments, parameter server 16 and client devices 14 may implement distributed learning. In some embodiments, parameter server 16 and client devices 14 may implement federated learning. In either case, client devices 14 implement local machine learning models (referred to as local models) and parameter server 16 implements a global machine learning model (referred to as a global model). Client devices 14 perform training of their local models and generate gradients. A gradient may be measurements of the change in parameters with respect to a change in a function of the parameters. In mathematical terms, gradient can be computed with a partial derivative of a function with respect to the parameters. For example, for a function f(θ), where θ represents parameters of a machine learning model, the gradient ∇f(0) can be a vector including the partial derivatives of f with respect to each parameter in θ. The function f can be a loss function. A loss function may be a function that measures the difference (e.g., error) between outputs of a machine learning model (also referred to as predicted outputs) and target outputs (also referred to as actual outputs).

Client devices 14 can send gradients to parameter server 16 over network 10. Parameter server 16 can aggregate gradients from client devices 14 and update parameters of the global model based on the aggregated gradients. The amount of data in a gradient can depend on the number of parameters in the local model and the representation of coordinates. A coordinate of a gradient may be an element of a vector (e.g., a partial derivative of a function with respect to a parameter). For example, a local model can have one billion parameters and each coordinate can be one byte of data. In such a scenario, a gradient would be 8 billion bytes. Transmitting gradients from client devices 14 to parameter server 16 can consume significant resources, such as power, compute, memory, network, and like type resources. In some embodiments, client devices 14 can compress gradients and send compressed gradients to parameter server 16 over network 10. Compression (also referred to as data compression) may be a reduction in the number of bits needed to represent data. By compressing the gradients, client devices 14 can conserve resources, such as power, compute, memory, network, and the like type resources.

In some embodiments, the compression performed by client devices 14 can be dynamic and managed using reinforcement learning. The parameters used for compressing the gradients at each client device 14 can be determined by RL agent 18. Such dynamic compression can be utilized to optimize different distributed learning or federated learning goals, such as convergence rate, fairness, and resource consumption (e.g., power, network, memory, compute, etc.). Client devices 14 and parameter server 16 can send data, such as state data and reward data as discussed below, that can be used by RL agent server 18 as input to an RL machine learning model (referred to as an RL model) to generate compression parameters for use by client devices 14.

Fig. 2 is a block diagram depicting a computing device 200 according to some embodiments. Each of RL agent server 18, parameter server 16, and client device 14 can be implemented using computing device 200 or a variation thereof. Computing device 200 can include software 214 executing on a hardware platform 202. Hardware platform 202 can include conventional components of a computing device, such as one or more central processing units (CPUs) 204, memory 206 (e.g., random access memory (RAM)), one or more network interface controllers (NICs) 210, local storage devices ("local storage 208"), and a power supply 218. CPUs 204 are configured to execute instructions, for example, executable instructions that perform one or more operations described herein, which may be stored in memory 206. NICs 210 enable computing device 200 to communicate with other devices using network protocols (e.g., Ethernet, Transmission Control Protocol/Internet Protocol (TCP/IP), etc.). NIC(s) 210 can be connected to network 10. Local storage 29 can include magnetic disks, solid-state disks, flash memory, and the like as well as combinations thereof. Power supply 216 can include circuits that provide power to hardware platform 202. In some embodiments, hardware platform 202 can include an ML circuit 212. ML circuit 212 can include digital logic circuits (e.g., logic gates, multiplexers, flip-flops, etc.) configured to perform ML operations, such as those used to implement an ML model. Software 214 can include an operating system (OS). The OS can be any commodity OS or hypervisor known in the art. Software 214 can further include ML software configured to perform ML operations, such as those used to implement an ML model.

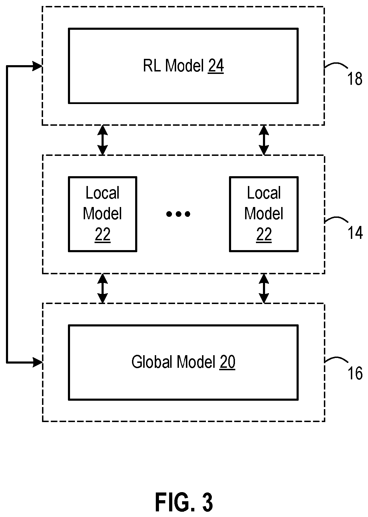

Fig. 3 is a block diagram depicting a logical view of the models in communication system 100 according to some embodiments. Each client device 14 implements a local model 22. A local model may be any type of machine learning model. For example, local model 22 can be a neural network. Parameter server 16 implements a global model 20. A global model may be an aggregate of the local models in client devices 14. RL agent server 18 can implement an RL model 24. An RL model may be a machine learning model that implements reinforcement learning. As discussed further herein, client devices 14 can send state and reward data to RL agent server 18, which can be input to RL model 24. RL model 24 can generate actions in response to the state and reward data. The actions can include updates to compression parameters for client devices 14. Each client device 14 can train its local model 22 and generate gradients. Each client device 14 can compress the gradients based on the compression parameters received from RL agent server 18. Client devices 14 can then send compressed gradients to parameter server 16. Parameter server 16 can decompress the gradients or use the compressed gradients directly to update parameters of global model 20. Parameter server 16 can distribute the parameters of global model 20 to each client device 14 to update the parameters of its local model 22. In some embodiments, RL agent server 18 can also receive state and reward data from parameter server 16 as input to RL model 24 when generating the updated compression parameters.

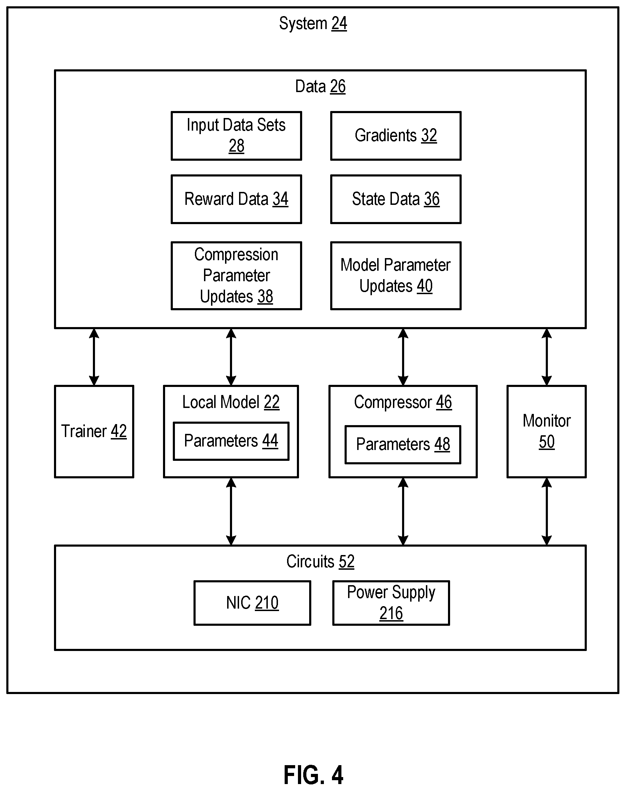

Fig. 4 is a block diagram depicting a system 24 of a client device 14 according to some embodiments. System 24 may be implemented by hardware circuits, software, or a combination of software and hardware circuits. For example, system 24 may be implemented using computing device 200 shown in Fig. 2. System 24 can include local model 22, trainer 42, compressor 46, and monitor 50. Some hardware components of system 24 can include circuits 52. Circuits 52 can include, for example, NIC 210 and power supply 216 of computing device 200. System 24 can send and receive data to and from network 10 through NIC 210. System 24 can receive power from power supply 216. Trainer 42, local model 22, compressor 46, and monitor 50 each can be implemented using software, hardware circuits, or a combination of software and hardware circuits. System 24 can store data 26, e.g., in memory 206 of computing system or a memory of a hardware circuit.

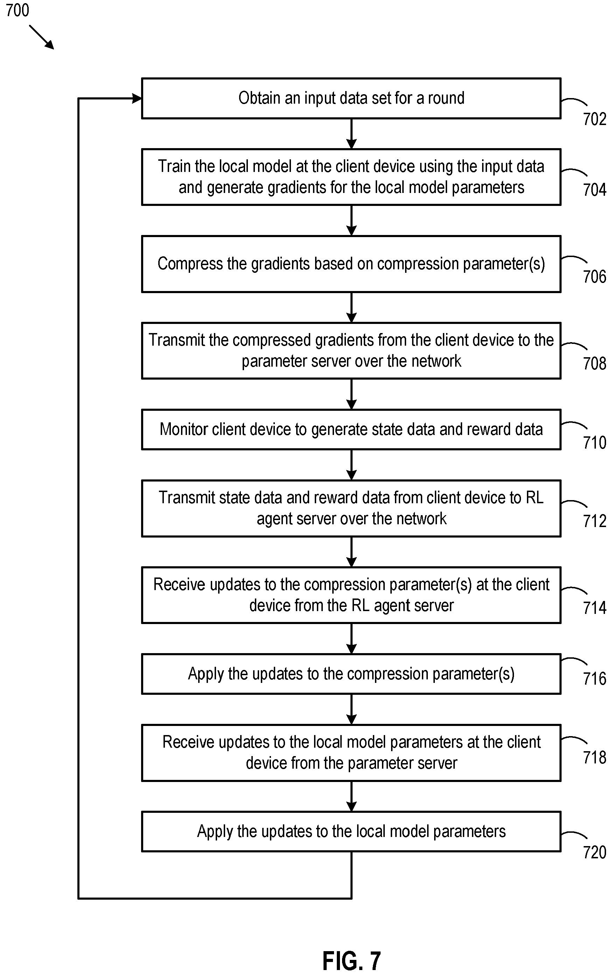

Fig. 7 is a flow diagram depicting a method 700 of transmitting data from client device 14 to parameter server 16 according to some embodiments. Method 700 can be understood with respect to system 24 of Fig. 4. Method 700 begins at step 702, where system 24 obtains an input data set for a round of training. System 24 can store input data sets 28 as data 26. In a distributed learning environment, for example, system 24 can obtain input data sets 28 from another system over the network (e.g., from parameter server 16 or another server). In a federated learning environment, for example, system 24 can obtain input data sets 28 at client device 14 (e.g., client device 14 generates input data sets 28). A data set may be a collection of numerical values. An input data set 28 may be a data set configured for input to local model 22.

At step 704, system 24 can train local model 22 using input data set 28 and generates gradients for parameters 44 of local model 22. The training process can depend on the type of local model 22. In some embodiments, local model 22 can be a neural network. Training a neural network can include: 1) forward propagation, where input data set 28 can be passed forward through the neural network to compute predicted outputs; 2) loss calculation, where the predicted outputs can be compared with target outputs using a loss function; and 3) back propagation, where the error from the loss function can be propagated backwards through the neural network to compute the gradients. Training of a neural network can further include 4) parameter update, where the model parameters are updated using the gradients as input to an optimization algorithm, such as gradient descent. In a distributed learning environment, the parameter update portion of the training can be performed at parameter server 16 on a global model. Thus, in some embodiments, system 24 omits the parameter update from its training function. Step 704 can be performed by trainer 42, which can apply input data set 28 to local model 22, perform the loss calculation, and perform the back propagation to generate gradients 32.

At step 706, system 24 can compress gradients 32 for the round based on one or more compression parameters. Step 706 can be performed by compressor 46 having one or more parameters 48. In some embodiments, compression can be achieved by controlling the number of bits per coordinate of a vector of gradients generated for the round. For example, trainer 42 can generate gradients 32 with some number of bits per coordinate. Compressor 46 can quantize each coordinate to reduce the number of bits per coordinate. A parameter 48 can be a target number of bits per coordinate for the quantization. Compressor 46 can implement one or more different compression algorithms, including simple quantization described above. Another compression algorithm can be sparsification, which can be used alone or in combination with quantization. A gradient vector can include many numerical values, some of which can be the same value. A specific numerical value can be chosen as a scalar value and all coordinates in the gradient vector having that scalar value can be represented by this single scalar value. For example, compressor 46 can generate a sparse tensor from gradients 32 generated by trainer 42. A sparse tensor can be a vector of ordered pairs, where each ordered pair includes a coordinate value and a gradient value. Coordinate values missing from the sparse tensor assume the scalar value. The scalar value and the range of gradient values that are assumed to be the scalar value (e.g., threshold) can be parameters 48 of compressor 46. Other types of compression algorithms are well known in the art. In general, such compression algorithms reduce the amount of gradient data to be sent from client 14 to parameter server 16.

At step 708, system 24 can transmit the compressed gradients from client device 14 to parameter server 16 over network 10. Transmission of the compressed gradients consumes resources of system 24. For example, transmission of the compressed gradients can consume power from power supply 216 and bandwidth of NIC 210. Other resources include cycles of CPU(s) 204, capacity of memory 26 and/or local storage 208, and the like.

At step 710, system 24 can monitor client device 14 to generate state data 36 and reward data 34. For each round of training, client device 14 can have a particular state. State data may be data that represents a current configuration of client device 14. State data can include, for example, data representing the configuration of local model 22, data representing configuration of circuits 52, or both. A non-exhaustive list of state data can include: 1) gradients 32 or information describing or derived from gradients 32; 2) parameters 44 or information describing or derived from parameters 44; 3) compression loss statistics from compressor 46 when compressing gradients 32; 4) statistics related to gradients 32, such as variance of gradients 32; 5) loss of local model 22 after training; 6) breakdown of 1-5 for each training step in case training is performed in batches of rounds; 7) power information, such as battery status, power budget, etc.; 8) network connectivity information, such as interconnect type (wired/wireless), bandwidth, latency, loss, etc.; 9) compute capabilities, such as the number of CPU(s) or other processors (e.g., graphics processing units (GPUs)) and their floating-point operations per second (FLOPs) or any other kind of performance metric; and 10) the cost of performing the training in terms of resources consumed.

Reward data may be data representing metrics to be optimized by reinforcement learning. Reward data can include, for example, data representing a change in local model 22 between rounds or data representing a change in resource consumption between rounds. A non-exhaustive list of reward data can include: 1) the loss improvement in the current round from a previous round for optimizing convergence of local model 22; or 2) the change in resource consumption between rounds in terms of power consumption, network consumption, compute consumption, memory/storage consumption, etc. System 24 can use monitor 50 to monitor circuits 52 and local model 22 to generate state data 36 and reward data 34. In some embodiments, reward data 34 may be a data set that includes measurements of resource consumption.

At step 714, system 24 can receive compression parameter updates 38 over network 10 from RL agent server 18. System 24 can use compression parameter updates 38 to update at least one of parameters 48 of compressor 46. For example, the number of bits per coordinate can be changed from one value to another value. In another example, the threshold used for sparsification can be changed from one value to another value. In another example, the compression algorithm can be changed from one compression algorithm to another compression algorithm (e.g., a parameter 48 can be the type of compression algorithm used). At step 716, system 24 can apply compression parameter updates 38 to update at least one parameter 48 of compressor 46. Updating the compression parameters can affect state of client device 14 in the next round, such as for example reducing resource consumption of at least one of circuits 52, improving performance of local model 22, or a combination of both. In some embodiments, compressor 46 can be implemented in hardware using digital logic circuits. In such case, system 24 can adjust the digital logic circuits to apply the updates to the compression parameters.

At step 718, system 24 can receive model parameter updates 40 over network 10 from parameter server 16. At step 720, system 24 can use model parameter updates 40 to update parameters 44 of local model 22. Method 700 can then return to step 702 for another round of training.

Although the steps of Fig. 7 are shown sequentially, it is to be understood that some steps can be performed concurrently or asynchronously with respect to other steps. For example, there can be two asynchronous processes, namely, one process for sending the state and reward data and another process for receiving the updated compression parameters. These processes can be independent such that the client can receive new compression parameters regardless of the current step being executed by the client. For example, steps 710-712 can execute as a first process, steps 714-716 can execute as a second process, and steps 702-708 and 718-720 can execute as a third process, where the first, second, and third processes executed in parallel and asynchronously with respect to one another.

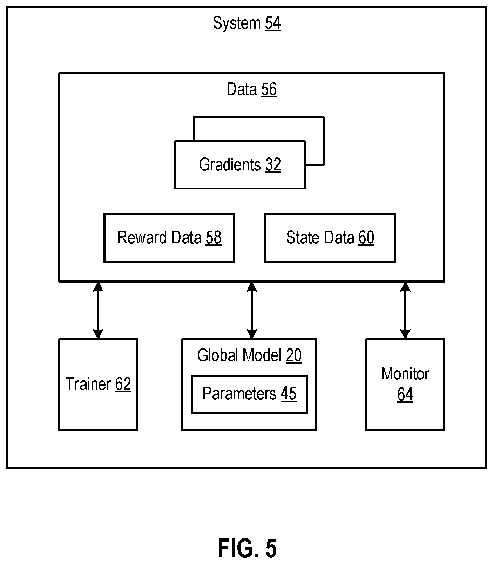

Fig. 5 is a block diagram depicting a system 54 of parameter server 16 according to some embodiments. System 54 may be implemented by hardware circuits, software, or a combination of software and hardware circuits. For example, system 54 may be implemented using computing device 200 shown in Fig. 2. System 54 can include a trainer 62, global model 20, and a monitor 64. System 54 can manage data 56 (e.g., stored in a memory), which can include gradients 32 received from client devices 14, reward data 58, and state data 60. Global model 20 can include parameters 45.

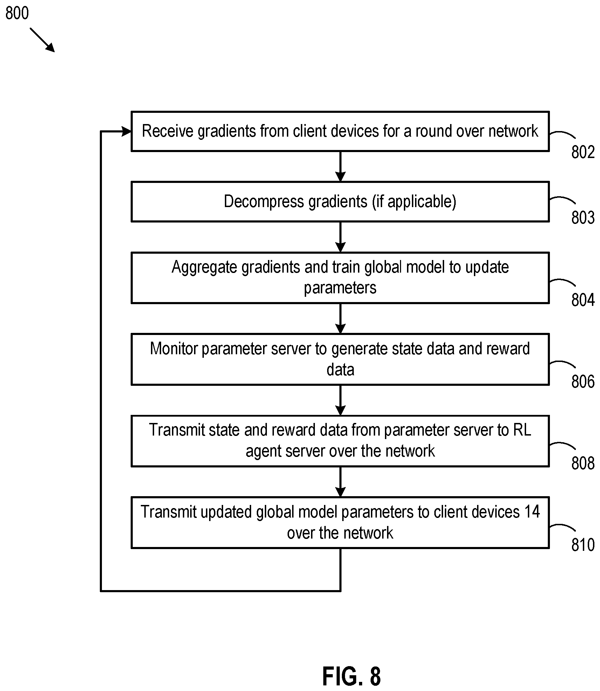

Fig. 8 is a flow diagram depicting a method 800 of processing data received at parameter server 16 received from client devices 14 over network 10 according to some embodiments. Method 800 can be understood with respect to system 54 of Fig. 5. Method 800 begins at step 802, where system 54 receives gradients 32 for a round over network 10. Client devices 14 can generate gradients 32 for a round (batch of rounds) of training as described above in method 700 of Fig. 7. Gradients 32 received by system 54 can be compressed by client devices 14 as described above in method 700. At step 803, system 54 can decompress gradients 32 if applicable (e.g., if the compression method allows decompression). For example, some compression methods, such as quantization, can be lossy such that the original gradients cannot be recovered. In such case, there may be no decompression performed at step 803. Other compression methods, such as sparsification, are not lossy and can be reversed (e.g., a sparse tensor can be converted back to a dense tensor). In such case, system 54 can perform decompression at step 803.

At step 804, system 54 can aggregate gradients 32 from across client devices 14 and train global model 20 to update parameters 45. Trainer 62 can obtain gradients 32 and perform a parameter update operation to update parameters 45. For example, global model 20 can be a neural network and the parameter update operation can include an optimization algorithm, such as gradient descent. The optimization algorithm performed by trainer 62 can adjust parameters 45 iteratively to minimize a loss function and improve performance of global model 20.

At step 806, system 54 can monitor parameter server 16 to generate state data 60 and reward data 58. For each round of training, parameter server 16 can have a particular state. State data may be data that represents a current configuration of parameter server 16. State data can include, for example, data representing the configuration of global model 20. A non-exhaustive list of state data at parameter server 16 can include: 1) number of total local model instances; 2) loss of global model 20 from training; and 3) aggregated statistics across training rounds. Reward data may be data representing metrics to be optimized by reinforcement learning. Reward data can include, for example, data representing a change in global model 20 between rounds. A non-exhaustive list of reward data at parameter server 16 can include a ratio that represents how many instances of the local model have been trained, how many rounds of training have occurred of the global model, and how many training rounds for a local model have occurred per client device.

At step 808, system 54 can transmit state data 60 and reward data 58 from parameter server 16 to RL agent server 18 over network 10. At step 810, system 54 can transmit updated global model parameters to client devices 14 over network 10. Method 800 can then return to step 802 and repeat for another round of training.

Although the steps of Fig. 8 are shown sequentially, it is to be understood that some steps can be performed concurrently or asynchronously with respect to other steps. For example, there can be two asynchronous processes, namely, one process for receiving the gradients from client and another process for monitoring and transmitting the state and reward data.

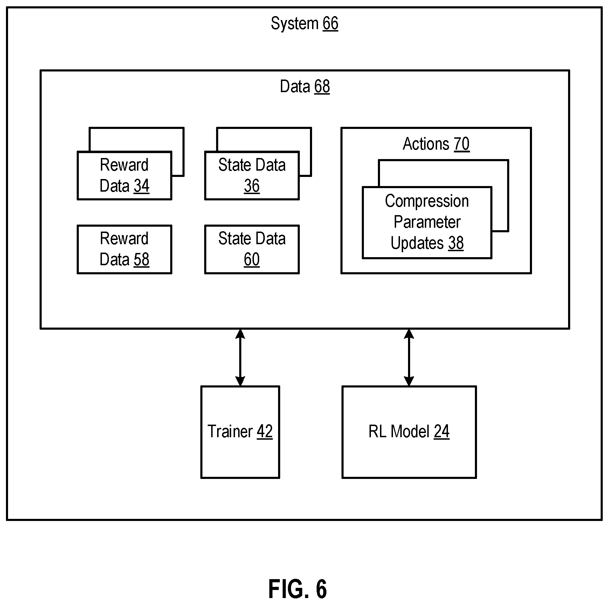

Fig. 6 is a block diagram depicting a system 66 of RL agent server 18 according to some embodiments. System 66 may be implemented by hardware circuits, software, or a combination of software and hardware circuits. For example, system 66 may be implemented using computing device 200 shown in Fig. 2. System 66 can include a trainer 42 and RL model 24. System 66 can manage data 68, which can include reward data 34 collected from client devices 14, reward data 58 collected from parameter server 16, state data 36 collected from client devices 14, state data 60 collected from parameter server 16, and actions 70 determined as output by RL model 24. Actions 70 can include compression parameter updates 38 for client devices 14.

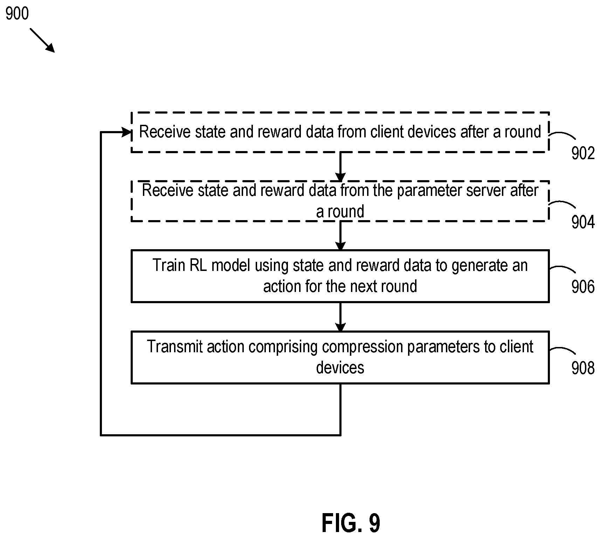

Fig. 9 is a flow diagram depicting a method 900 of processing data received at RL agent server 18 received from RL environment 12 over network 10 according to some embodiments. Method 900 can be understood with respect to system 66 of Fig. 6. Method 900 begins at optional step 902, wherein system 66 can receive state data 36 and reward data 34 from client devices 14 (or a subset of client devices 14, e.g., when only a subset of client devices 14 participate in a training round). Reward data 34 can include, for example, measurements or resource consumption in client devices 14. At step optional 904, system 66 can receive state data 60 and reward data 58 from parameter server 16. Steps 902 and 904 can be optional in that one or both can be skipped in a given round of training the RL model. At step 906, system 66 trains RL model 24 using the state and reward data to generate an action for the next round of training. For example, trainer 42 can apply the state and reward data to RL model 24 to generate an action 70 for the next round of training. RL model 24 includes policies. A policy can include a strategy or rule used to select actions in different states. A policy can map states to actions. RL model 24 selects an action based on the input state data. The objective of RL model 24 can be to learn an optimal policy that maximizes an aggregate of the reward data over time. At step 908, system 66 can transmit the action comprising compression parameters to client devices 14 for use during the next round of training.

Dynamic compression by reinforcement learning in a distributed learning environment has been described. Some embodiments modify compression parameters used by client devices in an RL environment across rounds of training using reinforcement learning. Modification of the compression parameters can improve the performance of a client device by improving resource consumption, including power consumption, network consumption, compute consumption, memory/storage consumption, or the like or any combination thereof. For example, reducing the number of bits per coordinate of the gradients sent from client devices to the parameter server reduce the amount of data to be transmitted, improving consumption of network resources and improving power consumption by the network interface controller. In some embodiments, the compression in a client device can be performed by hardware using a digital logic circuit. In such case, the techniques of updating compression parameters using reinforcement learning can be applied to adjust a specific machine, e.g., the compressor as implemented by a digital logic circuit.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

One or more embodiments of the present invention may be implemented as one or more computer programs or as one or more computer program modules embodied in computer readable media. The term computer readable medium refers to any data storage device that can store data which can thereafter be input to a computer system. Computer readable media may be based on any existing or subsequently developed technology that embodies computer programs in a manner that enables a computer to read the programs. Examples of computer readable media are hard drives, NAS systems, read-only memory (ROM), RAM, compact disks (CDs), digital versatile disks (DVDs), magnetic tapes, and other optical and non-optical data storage devices. A computer readable medium can also be distributed over a network-coupled computer system so that the computer readable code is stored and executed in a distributed fashion.

As used herein, the phrase "at least one of" preceding a series of items, with the term "and" or "or" to separate any of the items, modifies the list as a whole rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

As used herein, the term "couple" and its derivatives include: (a) electrical and communicative coupling; and (b) do not imply a direct connection, but rather may include intervening elements, unless described as "directly coupled."

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. A device, comprising:
a first system configured to implement a model having first parameters, generate gradients for the first parameters in response to training the model on first data sets, and compress the gradients based on second parameters; and
circuits in the first system, the circuits including a network interface controller;
wherein the first system is further configured to receive updates to the second parameters from a second system through the network interface controller coupled to a network, send the gradients as compressed to a third system through the network interface controller, and apply the updates to the second parameters to adjust resource consumption of at least one of the circuits.

2. The device according to claim 1, wherein the model is a local model of the device, wherein the third system is configured to implement a global model, and wherein the network interface controller is configured to receive updates to the first parameters from the third system based on the global model.

3. The device according to claim 1 or claim 2, wherein the first system is configured to generate second data sets comprising state of the device, and wherein the network interface controller is configured to send the second data sets to the second system over the network as input to a reinforcement learning (RL) model implemented by the second system, in particular wherein the first system is configured to generate third data sets comprising measurements of the resource consumption, and the network interface circuit is configured to send the third data sets to the second system over the network as input to the RL model.

4. The device according to claim 3, wherein the second data sets comprise first data describing state of the circuits and second data describing state of the model.

5. The device according to one of claims 1 to 4, wherein a parameter of the second parameters comprises a number of bits per coordinate of the gradients, and wherein the updates to the second parameters include a change to the number of bits per coordinate.

6. The device according to one of claims 1 to 5, wherein a parameter of the second parameters comprises a compression algorithm for compressing the gradients, and wherein the updates to the second parameters include a change of the compression algorithm.

7. The device according to one of claims 1 to 6, wherein the first system comprises a digital logic circuit configured to implement compression of the gradients, and wherein the first system is configured to adjust the digital logic circuit to apply the updates to the second parameters.

8. An apparatus, comprising:
a first server, coupled to a network, configured to implement a first model;
a second server, coupled to the network, configured to implement a second model; and
a client device including circuits, the circuits including a network interface controller coupled to the network, the client device configured to:
implement a third model having first parameters;
generate gradients for the first parameters in response to training the third model on first data sets;
compress the gradients based on second parameters;
receive, through the network interface controller, updates to the second parameters from the second server;
send, through the network interface controller, the gradients as compressed to the first server; and
apply the updates to the second parameters to adjust resource consumption of at least one of the circuits.

9. The apparatus according to claim 8, wherein the first model comprises a global model for multiple client devices including the client device, wherein the second model comprises a reinforcement learning (RL) model, and wherein the second server is configured to:
receive, over the network, first state of the client devices;
receive, over the network, measurements of resource consumption in the client devices; and
apply the first state and the measurements of resource consumption to the RL model to generate the updates to the second parameters,
in particular wherein the second server is further configured to receive, over the network, second state of the global model from the first server, and apply the second state to the RL model along with the first state and the measurements or resource consumption to generate the updates to the second parameters
and/or
in particular wherein the second server is configured to send the updates to the second parameters to each of the multiple client devices over the network
and/or
in particular wherein the first state includes first data describing state of the circuits of the client device and second data describing state of the third model.

10. The apparatus according to claim 8 or claim 9, wherein client device a digital logic circuit configured to implement compression of the gradients, and wherein the client device is configured to adjust the digital logic circuit to apply the updates to the second parameters.

11. The apparatus according to one of claims 8 to 10, wherein the circuits of the client device include a power supply, and wherein the client device is configured to apply the updates to the second parameters to adjust power consumption from the power supply by the client device.

12. The apparatus according to one of claims 8 to 11, wherein a parameter of the second parameters comprises a number of bits per coordinate of the gradients, and wherein the updates to the second parameters include a change to the number of bits per coordinate.

13. The apparatus according to one of claims 8 to 12, wherein a parameter of the second parameters comprises a compression algorithm for compressing the gradients, and wherein the updates to the second parameters include a change of the compression algorithm.

14. A method of data transmission in a network, comprising:
implementing, by a first system of a device coupled to the network, a model having first parameters;
generating, by the first system, gradients for the first parameters in response to training the model on first data sets;
compressing, by the first system, the gradients based on second parameters;
receiving, at the first system over the network, updates to the second parameters from a second system;
sending, from the first system over the network, the gradients as compressed to a third system; and
applying, by the first system, the updates to the second parameters to adjust resource consumption of at least one circuit in the device,
in particular the method further comprising:
generating, by the first system, second data sets comprising state of the device;
generating, by the first system, third data sets comprising measurements of the resource consumption; and
sending, by the first system over the network, the second and third data sets to the second system as input to a reinforcement learning (RL) model implemented in the second system to generate the updates to the second parameters.

15. The method according to claim 14, wherein the device comprises a digital logic circuit that implements at least a portion of the model and compresses the gradients, and wherein the method comprises:
adjusting the digital logic to apply the updates to the second parameters.
